# FASCICULE DE BREVET EUROPEEN

(11) **EP 2 265 493 B1**
(45) Date de publication et mention de la délivrance du brevet: **28.09.2011**
(21) Numéro de dépôt: 09722276.4
(22) Date de dépôt: 12.03.2009
(51) Int. Cl.: B64C 25/20, B64C 25/14, B64C 25/10, B64C 25/26

(54) **DEVERROUILLAGE D'UN ORGANE DE STABILISATION DE CONTREFICHE BRISEUSE D'ATTERRISSEUR D'AERONEF.**
ENTRIEGELN EINES GLIEDS, DAS DIE TRENNSTÜTZSTREBE EINES FLUGZEUGFAHRWERKS STABILISIERT
UNLOCKING OF A MEMBER THAT STABILIZES THE BREAKING JURY STRUT OF AN AIRCRAFT LANDING GEAR

(30) Priorité: 14.03.2008 FR 0801408
(43) Date de publication de la demande: 29.12.2010
(73) Titulaire: Messier-Bugatti-Dowty, 78140 Velizy Villacoublay (FR)
(72) Inventeur: MARTINEZ, Laurent, Mercer Island Washington 98040 (US); BOILLEY, François, F-94110 Arcueil (FR); BALDUCCI, Gérard, F-78640 Saint Germain La Grange (FR)
(74) Mandataire: Parzy, Benjamin Alain
(86) Numéro de dépôt international: PCT/FR2009/000255
(87) Numéro de publication internationale: WO 2009/115713

(56) Documents cités:
- FR-A- 1 547 764
- GB-A- 518 073
- US-A- 5 022 609

## Description

L'invention concerne le domaine des atterrisseurs, et porte plus précisément sur le déverrouillage d'un organe de stabilisation de contrefiche briseuse d'atterrisseur d'aéronef.

### ARRIERE-PLAN DE L'INVENTION

Beaucoup d'atterrisseurs rétractables sont maintenus en position déployée au moyen d'une contrefiche briseuse comportant deux bras articulés l'un à l'autre qui sont maintenus dans une position sensiblement alignée par un organe de stabilisation. L'un des bras est articulé à un caisson de l'atterrisseur, tandis que l'autre des bras est articulé à la structure de l'aéronef. Les bras de contrefiche ainsi maintenus alignés forment une structure de contreventement immobilisant l'atterrisseur en position déployée.

En général, l'organe de stabilisation comporte lui-même deux biellettes articulées l'une à l'autre, les deux biellettes étant rappelées par un organe ressort vers une position alignée dans laquelle elles stabilisent les bras de la contrefiche en position alignée. Un actionneur de déverrouillage permet de briser l'alignement des biellettes de l'organe de stabilisation, ce qui brise l'alignement des bras de la contrefiche, autorisant ainsi le relevage de l'atterrisseur sous l'action d'un actionneur de relevage agissant par exemple directement sur le caisson de l'atterrisseur.

De façon connue en soi, l'actionneur de déverrouillage est un actionneur télescopique attelé d'une part au caisson de l'atterrisseur ou à un des bras de contrefiche, et d'autre part à l'une des biellettes de l'organe de stabilisation. Lors du déploiement de l'atterrisseur depuis une position stockée vers sa position déployée, l'actionneur télescopique de déverrouillage est normalement libre de s'allonger ou de se raccourcir au gré des mouvements relatifs des deux parties auquel il est attelé.

Lors de la phase de repliement de l'atterrisseur en position stockée, il convient d'activer l'actionneur télescopique de déverrouillage de sorte que celui-ci provoque la brisure de l'alignement des biellettes de l'organe de stabilisation. Puis l'actionneur de relevage prend le relais en entraînant l'atterrisseur vers sa position stockée. Les bras de contrefiche et les biellettes de l'organe de stabilisation se voient alors imposer des mouvements de rotation relative lors du relevage de l'atterrisseur, et imposent eux-mêmes à l'actionneur télescopique de déverrouillage des mouvements télescopiques lors desquels il arrive que l'actionneur télescopique, s'il est toujours activé, s'oppose au mouvement de relevage.

Une solution immédiate à ce problème consiste à désactiver l'actionneur télescopique de déverrouillage dès qu'il a rempli son office, à savoir dès qu'il a provoqué la brisure de l'alignement des biellettes de l'organe de stabilisation de la contrefiche. Cependant, cette façon de procéder nécessite de complexifier la logique de relevage, en prévoyant des capteurs disposés pour détecter que l'alignement des biellettes a été brisé, ce qui oblige à prévoir des câblages sur des parties en mouvement de l'atterrisseur pour remonter l'information des capteurs vers le calculateur qui met en oeuvre la logique de relevage.

Un atterrisseur avec toutes les caractéristiques du préambule de la revendication 1 est connu de US-A-5 022 609.

### OBJET DE L'INVENTION

L'invention a pour objet une solution n'imposant pas la désactivation de l'organe télescopique de déverrouillage lors de la phase de relevage de l'atterrisseur, tout en évitant que l'organe télescopique, resté activé, ne puisse s'opposer au relevage de l'atterrisseur.

### BREVE DESCRIPTION DE L'INVENTION

A cet effet, on propose un atterrisseur destiné à être monté mobile sur un aéronef entre une position stockée et une position déployée, l'atterrisseur comportant :
- un caisson monté articulé sur l'aéronef pour permettre un mouvement de l'atterrisseur entre la position stockée et la position déployée ;
- une contrefiche briseuse à deux bras articulés entre eux dont l'un est articulé sur l'aéronef et l'autre sur l'atterrisseur, les deux bras étant en position sensiblement alignée au moins lorsque l'atterrisseur est en position déployée ;
- un organe de stabilisation de la contrefiche en position alignée comportant deux biellettes articulées entre elles dont l'une est articulée à l'un des bras de la contrefiche et l'autre est articulée à l'atterrisseur ou à l'aéronef, les deux biellettes étant rappelées par un organe ressort vers une position alignée dans laquelle elles stabilisent les bras de la contrefiche en position sensiblement alignée,
- un organe télescopique de déverrouillage ayant une extrémité attelée à l'une des biellettes, l'organe télescopique étant sélectivement activable pour briser un alignement des biellettes ;
dans lequel ladite biellette comporte une lumière dans laquelle est engagée l'extrémité de l'organe télescopique de déverrouillage et qui est agencée de telle sorte que quand l'organe télescopique est activé, ladite extrémité coopère avec un fond de la lumière pour amener ladite biellette vers une position hors alignement que ladite biellette atteint lorsque l'organe télescopique arrive en butée interne, la lumière autorisant tout mouvement d'articulation de ladite biellette au-delà de la position hors alignement.

Ainsi, lors d'un relevage de l'atterrisseur, l'organe télescopique de déverrouillage est activé pour briser l'alignement des biellettes. L'alignement des bras de la contrefiche, est alors également brisé, permettant ainsi le relevage de l'atterrisseur par l'actionneur de relevage. Lors du mouvement imposé par l'actionneur de relevage, il se peut que la biellette attelée à l'organe de déverrouillage pivote au-delà de la position hors alignement. Grâce à la disposition de l'invention, ce mouvement au-delà de la position hors alignement se fait sans que l'organe de déverrouillage ne soit sollicité, et donc qu'il ne puisse s'opposer au mouvement de la biellette.

Cette disposition évite donc toute opposition ou résistance de l'organe de déverrouillage à un pivotement de la biellette au-delà de la position hors alignement, tout en conservant une logique de commande simple de l'organe de déverrouillage, qui peut rester activé pendant toute l'opération de relevage.

Qui plus est, cette disposition évite de prévoir sur l'organe de déverrouillage la surcourse qui est nécessaire dans les atterrisseurs connus pour éviter que l'organe de déverrouillage n'empêche tout mouvement de la biellette au-delà de la position hors alignement. L'actionneur de déverrouillage peut ainsi être conçu avec une course utile faible, rendant cet actionneur particulièrement compact.

### BREVE DESCRIPTION DES DESSINS

L'invention sera mieux comprise à la lumière des figures des dessins annexés, parmi lesquelles :
- la figure 1 est une vue schématique de côté d'un atterrisseur en position déployée, montrant l'organe de déverrouillage et la biellette munie de la lumière circulaire selon l'invention, l'atterrisseur étant illustré en position déployée.
- La figure 2 est une vue agrandie de l'atterrisseur de la figure 1, illustrant l'atterrisseur en cours de relevage alors que l'organe de déverrouillage vient de briser l'alignement des biellettes ;
- La figure 3 est une vue analogue à la figure 2, illustrant l'atterrisseur dans une étape ultérieure du relevage.

### DESCRIPTION DETAILLEE DE L'INVENTION

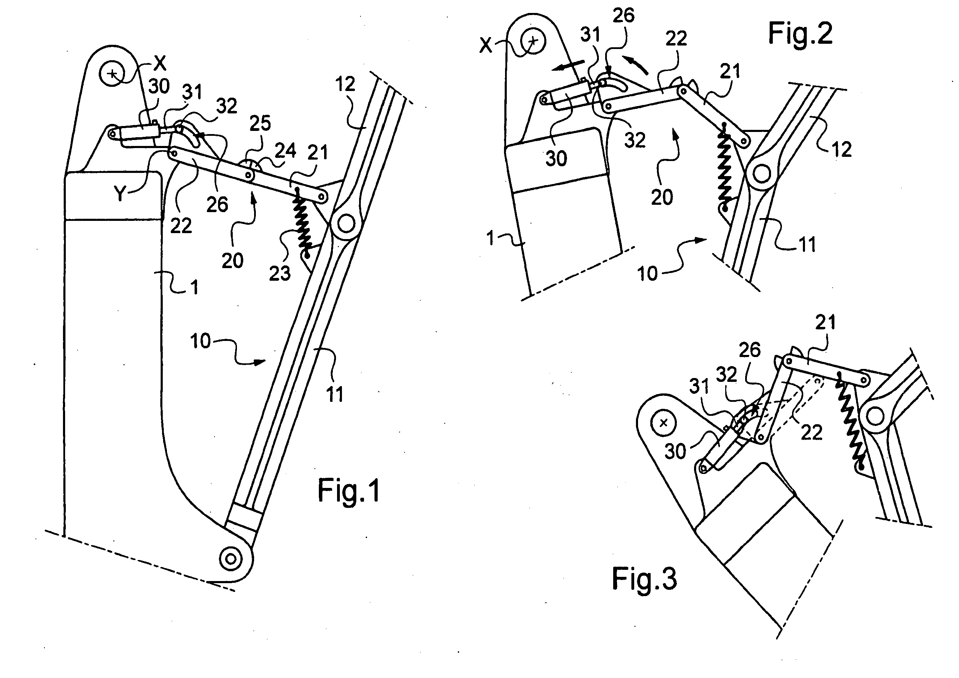

En référence à la figure 1, l'atterrisseur illustré comporte un caisson 1 articulé sur la structure de l'aéronef selon l'axe X, vu ici en bout. Le caisson 1 reçoit une tige coulissante (non visible ici) qui porte à son extrémité une ou plusieurs roues. De façon connue en soi, l'atterrisseur est maintenu en position déployée au moyen d'une contrefiche 10 comportant un bras inférieur 11 et un bras supérieur 12 articulés entre eux, le bras inférieur 11 étant lui-même articulé sur le caisson 1 tandis que le bras supérieur 12 est articulé sur la structure de l'aéronef. Les bras 11,12 de la contrefiche sont maintenus dans la position sensiblement alignée illustrée ici au moyen d'un organe de stabilisation 20.

L'organe de stabilisation 20 comporte une première biellette 21 et une deuxième biellette 22 articulées entre elles, la première biellette 21 étant elle-même articulée ici sur le bras supérieur 12 de contrefiche, tandis que la deuxième biellette 22 est articulée sur le caisson 1. Un organe ressort 23 attelé à la première biellette 21 rappelle les biellettes 21,22 dans la position alignée illustrée ici qui est définie par des butées 24,25 disposées sur chacune des biellettes pour venir en contact l'une contre l'autre sous l'action de l'organe ressort 23.

Les biellettes 21,22 ainsi confirmées dans la position alignée contribuent à stabiliser les bras 11,12 de la contrefiche 10 dans la position sensiblement alignée. La contrefiche 10 constitue ainsi un ensemble rigide à même d'immobiliser en rotation autour de l'axe X le caisson 1 de l'atterrisseur dans la position déployée illustrée ici. Tout ceci est bien connu et est rappelé pour situer le contexte de l'invention.

Pour permettre le relevage de l'atterrisseur, il convient de briser l'alignement des bras 11,12 de la contrefiche 10. A cet effet, un actionneur de déverrouillage télescopique 30, ici un vérin hydraulique simple effet, est attelé entre le caisson 1 et la deuxième biellette 22 pour, lorsqu'il est activé, exercer un effort tendant à briser l'alignement des biellettes à l'encontre de l'organe ressort 23.

Selon l'invention, l'extrémité 32 de la tige 31 de l'actionneur de déverrouillage 30 qui est attelée à la deuxième biellette 22 est engagée dans une lumière circulaire 26 ménagée dans la deuxième biellette 22 et qui s'étend ici selon un arc de cercle centré sur l'axe d'articulation Y (ici parallèle à l'axe X) de la deuxième biellette 22 sur le caisson 1.

Comme cela est illustré à la figure 2, lorsque l'actionneur de déverrouillage 30 est activé dans un sens tendant à faire rentrer la tige 31, l'extrémité 32 de la tige 31 coopère avec un fond de la lumière circulaire 26 pour tirer sur la deuxième biellette 22 et la faire tourner autour de son axe d'articulation sur le caisson 1, ce qui a pour effet de briser l'alignement des biellettes 21,22. Lorsque l'actionneur de déverrouillage 30 parvient en butée rentrée, la deuxième biellette 22 est alors amenée dans la position hors alignement illustrée à la figure 2, dans laquelle, l'alignement des bras 11,12 de la contrefiche 10 est suffisamment brisé pour permettre le relevage de l'atterrisseur sous l'action d'un actionneur de relevage (non représenté) agissant directement sur le caisson 1 pour le faire pivoter autour de son axe d'articulation X.

Lors du mouvement de relevage de l'atterrisseur, il se peut que la deuxième biellette 22 soit amenée vers une position angulaire au-delà de la position hors alignement, comme illustré à la figure 3. On constate sur cette figure que la lumière 26 permet le mouvement de la deuxième biellette 22 au-delà de la position hors alignement (illustrée en pointillés) puisque l'extrémité de la tige de l'actionneur de déverrouillage se promène librement dans la lumière circulaire, sans s'opposer ni opposer de résistance au mouvement de la deuxième biellette 22 au-delà de la position hors alignement.

Ainsi, la cinématique de relevage est particulièrement simple. Il suffit d'activer simultanément l'actionneur de déverrouillage et l'actionneur de relevage. L'actionneur de déverrouillage 30 tire sur la deuxième biellette 22 pour amener cette dernière en position hors alignement, puis l'actionneur de relevage, dont l'action est rendue efficace par la brisure de l'alignement des bras de contrefiche 10, poursuit le mouvement en relevant l'atterrisseur. Pendant le relevage, l'actionneur de déverrouillage 30 reste activé et est ainsi maintenu en position rentrée. Cependant, grâce à la lumière 26, l'actionneur de déverrouillage n'exerce aucune résistance contre le mouvement de la deuxième biellette au-delà de la position hors alignement.

L'invention n'est pas limitée à ce qui vient d'être décrit, mais, bien au contraire, englobe toute variante entrant dans le cadre défini par les revendications. En particulier, bien que l'on ait ici indiqué que la lumière est circulaire de sorte que l'actionneur reste immobile par rapport au caisson lorsque l'extrémité de la tige se promène librement dans la lumière, on pourra prévoir d'autres formes de lumières, du moment qu'elle permette un mouvement de la biellette associée au-delà de la position hors alignement alors que l'actionneur est en butée rentrée.

En outre, on a ici décrit un agencement type dans lequel l'actionneur de déverrouillage 30 et la biellette 22 associée sont tous deux articulés sur le caisson 1 de l'atterrisseur. D'autres dispositions sont bien connues. L'actionneur de déverrouillage peut par exemple être attelé à l'un des bras de contrefiche et agir sur celle des deux biellettes qui est attelée à la contrefiche. Dans une autre configuration connue, l'actionneur de déverrouillage peut être attelé à la structure de l'aéronef et agir sur celle des biellettes qui est articulée sur la structure de l'aéronef. Il est immédiat pour l'homme du métier d'appliquer l'invention à de telles configurations.

Enfin, bien que l'on ait ici illustré un actionneur de déverrouillage dont l'activation provoque son raccourcissement jusqu'à une position définie par une butée interne rentrée, il est immédiat pour l'homme du métier que la disposition de l'invention peut être transposée à un actionneur de déverrouillage dont l'activation provoque son allongement jusqu'à une position définie par une butée interne sortie.

## Revendications

1. Atterrisseur monté mobile sur un aéronef entre une position stockée et une position déployée, l'atterrisseur comportant :
- un caisson (1) apte à être monté articulé sur l'aéronef pour permettre un mouvement de l'atterrisseur entre la position stockée et la position déployée ;
- une contrefiche (10) briseuse à deux bras (11,12) articulés entre eux dont l'un (12) est apte à être articulé sur l'aéronef et l'autre sur l'atterrisseur (11), les deux bras étant en position sensiblement alignée au moins lorsque l'atterrisseur est en position déployée ;
- un organe de stabilisation (20) de la contrefiche en position alignée comportant deux biellettes (21,22) articulées entre elles dont l'une est articulée sur la contrefiche (10) et l'autre est articulée à l'atterrisseur ou apte à être articulée à l'aéronef, les deux biellettes étant rappelées par des ressorts (23) vers une position alignée dans laquelle elles stabilisent les bras de la contrefiche (10) en position sensiblement alignée,
- un organe télescopique de déverrouillage (30) ayant une extrémité (32) attelée à l'une des biellettes (22) l'organe télescopique étant sélectivement activable pour briser un alignement des biellettes (21, 22);
**caractérisé en ce que** ladite biellette (22) comporte une lumière (26) dans laquelle l'extrémité (32) de l'organe télescopique de déverrouillage (30) est engagée et qui est agencée de telle sorte que quand l'organe télescopique (36) est activé, ladite extrémité (32) coopère avec un fond de la lumière (26) pour amener ladite biellette (22) vers une position hors alignement que ladite biellette (22) atteint lorsque l'organe télescopique (30) arrive en butée interne, la lumière autorisant tout mouvement d'articulation de ladite biellette au-delà de la position hors alignement.

2. Atterrisseur selon la revendication 1, dans lequel la lumière (26) est circulaire et s'étend selon un arc de cercle centré sur un axe d'articulation (4) de ladite biellette (22).

## Claims

1. Landing gear mounted on an aircraft in such a way as to be movable between a stowed position and a deployed position, the landing gear incorporating:
- a barrel (1) adapted to be mounted in a hinged way on the aircraft to enable the landing gear to move between the stowed position and the deployed position;
- a folding strut (10) with two arms (11, 12) hinged to each other, one (12) of which is adapted to be hinged to the aircraft while the other is hinged to the landing gear (11), the two arms being in a substantially aligned position at least when the landing gear is in the deployed position;
- a stabilizing member (20) to stabilize the strut in an aligned position, having two rods (21, 22) hinged to each other, one of which is hinged to the strut (10) while the other is hinged to the landing gear or adapted to be hinged to the aircraft, the two rods being pushed back by springs (23) toward an aligned position in which they stabilize the arms of the strut (10) in a substantially aligned position;
- a telescopic unlocking member (30) having one end (32) coupled to one of the rods (22), the telescopic member being selectively activatable to break an alignment of the rods (21, 22);
**characterized in that** said rod (22) has an aperture (26) in which the end (32) of the telescopic unlocking member (30) engages and which is arranged in such a way that, when the telescopic member (30) is activated, said end (32) interacts with an end of the aperture (26) to move said rod (22) toward a non-aligned position which said rod (22) reaches when the telescopic member (30) reaches an internal stop, the aperture allowing any hinged movement of said rod beyond the non-aligned position.

2. Landing gear according to Claim 1, in which the aperture is circular and extends along an arc of a circle centered on a hinging axis (4) of said rod.

## Patentansprüche

1. Fahrwerk, das an einem Flugzeug beweglich zwischen einer eingefahrenen Position und einer ausgefahrenen Position montiert ist, wobei das Fahrwerk umfasst:
- ein Gehäuse (1), das dazu geeignet ist, an dem Flugzeug gelenkig montiert zu werden, um eine Bewegung des Fahrwerks zwischen der eingefahrenen Position und der ausgefahrenen Position zu gestatten,
- eine Knickstrebe (10) mit zwei aneinander angelenkten Armen (11, 12), von denen einer (12) dazu geeignet ist, an dem Flugzeug angelenkt zu werden, und der andere (11) dazu geeignet ist, an dem Fahrwerk angelenkt zu werden, wobei die beiden Arme, zumindest wenn das Fahrwerk in der ausgefahrenen Position ist, in einer im Wesentlichen fluchtenden Stellung sind,
- ein Stabilisierungselement (20) zum Stabilisieren der Strebe in der fluchtenden Stellung, umfassend zwei, aneinander angelenkte Lenker (21, 22), von denen einer an der Strebe (10) angelenkt ist und der andere an dem Fahrwerk angelenkt ist oder dazu geeignet ist, an dem Flugzeug angelenkt zu werden, wobei die beiden Lenker durch Federn (23) in eine fluchtende Stellung rückgestellt werden, in der sie die Arme der Strebe (10) in einer im Wesentlichen fluchtenden Stellung stabilisieren,
- ein Teleskop-Verriegelungselement (30), das ein Ende (32) hat, das an einem der Lenker (22) angelenkt ist, wobei das Teleskopelement selektiv aktivierbar ist, um eine Fluchtstellung der Lenker (21, 22) aufzuheben, **dadurch gekennzeichnet, dass** der genannte Lenker (22) ein Schlitzloch (26) umfasst, mit dem das Ende (32) des Teleskop-Verriegelungselements (30) in Eingriff steht und das derart angeordnet ist, dass, wenn das Teleskopelement (30) aktiviert ist, das genannte Ende (32) mit einem Boden des Schlitzloches (26) zusammenwirkt, um den genannten Lenker (22) in eine Außerfluchtstellung mitzunehmen, die der genannte Lenker (22) erreicht, wenn das Teleskopelement (30) an einem inneren Anschlag ankommt, wobei das Schlitzloch jede Gelenkbewegung des genannten Lenkers jenseits der Außerfluchtstellung gestattet.

2. Fahrwerk nach Anspruch 1, wobei das Schlitzloch (26) kreisförmig ist und sich gemäß einem Kreisbogen erstreckt, der auf eine Gelenkachse (4) des genannten Lenkers (22) zentriert ist.
